# EUROPÄISCHE PATENTSCHRIFT

(11) **EP 2 071 243 B1**
(45) Veröffentlichungstag und Bekanntmachung des Hinweises auf die Patenterteilung: **07.03.2018**
(21) Anmeldenummer: 08020870.5
(22) Anmeldetag: 02.12.2008
(51) Int. Cl.: F24B 1/02, F24B 5/02, F23N 3/04, F23L 11/02, F23L 13/02

(54) **Feuerungsanlage, insbesondere Kamin- oder Kachelofen**
Combustion assembly, in particular stoves or tiled stoves
Installation de combustion, notamment cheminées ou poêles en faïence

(30) Priorität: 15.12.2007 DE 102007060656
(43) Veröffentlichungstag der Anmeldung: 17.06.2009
(73) Patentinhaber: Spartherm Feuerungstechnik GmbH, 49324 Melle (DE)
(72) Erfinder: Schmatloch, Volker, 49324 Melle (DE); Skrzypek, Vinzenz, 32120 Hiddenhausen (DE)
(74) Vertreter: Pott, Ulrich

(56) Entgegenhaltungen:
- CH-A- 182 666
- DE-A1- 4 404 705
- DE-U1-202004 020 320
- FR-A- 2 542 849
- FR-A- 2 558 934
- FR-A- 2 675 886
- FR-A- 2 675 887
- FR-A- 2 794 520

## Beschreibung

Die Erfindung betrifft eine Feuerungsanlage. Sie bezieht sich insbesondere auf einen Kamin- oder Kachelofen, einen Kamineinsatz oder dergleichen Vorrichtung für die Integration einer Feuerungsstätte, die mit Brennstoffen wie Holz, Stroh oder anderen nachwachsenden Brennstoffen oder mit Kohlenstoffen befeuerbar ist, mit einem verschließbaren Feuerraum und einem Verbrennungsluftanschluss an einer Verbrennungsluftzufuhr, wobei der Feuerraum einen Primärluftanschluss sowie einen Sekundärluftanschluss der Verbrennungsluft und eine an einen Schornstein oder dergleichen Abgaseinrichtung anschließenden Abgasführung aufweist.

Mit Biomasse, d. h. vorwiegend mit Holz, betriebene Feuerungsanlagen leisten den größten Beitrag zur Nutzung regenerativer Energien. Aus diesem Grunde und auch wegen der damit erreichbaren Verbesserung der Wärmeversorgungssicherheit in Privathaushalten erfreuen sich diese Feuerungsanlagen zunehmender Beliebtheit.

Diese Feuerungsanlagen sind insbesondere für Einzelfeuerstätten vorgesehen, bei denen die Verbrennung ohne Gebläseunterstützung abläuft und die Verbrennungsluftzufuhr oder die Abgasleitung mit Hilfe des natürlichen Schornsteinzuges bewerkstelligt wird. Solche Feuerstätten können in vorteilhafter Weise ohne elektrische Hilfsenergie betrieben werden, sind dafür aber auf den Naturzug des Schornsteins angewiesen, der durch eine entsprechende Auslegung der Schornsteinanlage sichergestellt werden kann.

Insbesondere chargenweise beschickte Feuerstätten geben die Wärme üblicherweise nicht gleichmäßig über eine längere Zeit ab, sondern erzeugen nach einer Anbrennphase mit eher schwacher Wärmeabgabe während einer begrenzten Zeitspanne eine hohe Wärmemenge. Dieser Phase folgt dann eine Ausbrandphase, während der die Wärmeabgabe allmählich ausklingt. Entsprechend der Wärmeerzeugung kann auch die Abgastemperatur, d. h. die Temperatur der Gassäule im Schornstein variieren. Derartige Temperaturänderungen haben wiederum zeitliche Veränderungen der Gasdichte im Schornstein zur Folge und damit entsprechende Auswirkungen auf den Schornsteinzug, der von Dichteunterschieden angetrieben wird. Der Schornsteinzug kann zudem von Witterungsbedingungen abhängen und insbesondere bei heftigeren Winden starken Variationen unterliegen.

Zur Steuerung der Verbrennungsluftzufuhr weisen Feuerstätten herkömmlicher Bauart vielfach Einstellvorrichtungen auf, mit denen Querschnitte in Luftzuführungen verkleinert werden können. Moderne Einzelfeuerstätten haben meist eine gestufte Luftzufuhr, wobei ein Teil der Zuluft als Primärluft direkt in das Glutbett eingedüst wird und ein anderer Teil als Sekundärluft oberhalb des Glutbettes mit den Verbrennungsgasen vermischt wird, um durch eine vollständige Nachverbrennung eine optimierte Verbrennungsgüte zu erreichen und damit die Schadstoffemissionen zu minimieren. Die Einstellungen dazu können üblicherweise von Hand vorgenommen werden und sind dann während des Abbrandes zur jeweiligen Abbrandphase passend einzustellen.

Nachteilig hierbei ist, dass bei der Zuluftsteuerung die Zugverhältnisse im Schornstein nicht hinreichend zu berücksichtigen sind.

Aus der DE 20 2004 020 320 U1 ist ein Brennstoffkessel mit einem Feuerraum und einer Klappe zur Steuerung einer Primärluftzufuhr und einer Klappe zur Steuerung einer Sekundärluftzufuhr im unteren Bereich des Feuerraumes bekannt, bei dem eine Messeinrichtung zur Erfassung des Kaminzuges vorgesehen ist. Zum Regeln eines Saugzuggebläses ist eine Einrichtung zur Differenzdruckmessung im Primärluftkanal angeordnet, die einer stetig regelbaren Primärluftreguliereinrichtung nachgeschaltet ist. Der Kaminzug ist jedoch nur durch das regelbare Saugzuggebläse einzustellen, so dass dieses Saugzuggebläse ständig motorisch anzutreiben ist.

Aus der DE 37 43 205 C2 ist eine Brenneinrichtung für flüssige Brennstoffe mit einem Brennraum bekannt, dem Verbrennungsluft zuzuführen ist und dessen Abgase an einem Abgasstrom anzuordnende Wärmetauscher zur Erwärmung eines Wärmeträgermediums vorgesehen ist. Der Verbrennungsvorgang ist durch eine Regelvorrichtung zu beeinflussen, indem ein regelbares Hauptgebläse betätigt wird. Eine Zugregelvorrichtung ist hier nicht vorgesehen.

Aus der WO 00/50817 A1 ist eine Feuerungsanlage mit einem Brennraum bekannt, dem in unterschiedlichen Höhenlagen und auch von unten Verbrennungsluft zuzuführen ist. Diese Verbrennungsluft kann auch über eine Bypassleitung direkt in einen Abgasstrom eingebracht werden. Eine Zugregelvorrichtung ist jedoch auch hier nicht vorgesehen.

Aus der US 49 41 451 A ist eine Feuerungsanlage bekannt, bei der ähnlich wie bei der vorgenannten WO 00/50817 A1 einem Brennraum in unterschiedlichen Positionen Verbrennungsluft zugeführt werden kann. Ebenfalls ist es möglich, dass über eine Bypassleitung Luft an dem Brennraum vorbei wiederum ausströmen kann. Eine Zugregelvorrichtung ist jedoch auch hier nicht vorgesehen.

Aus der DE 44 04 705 A1 ist eine Feuerungsanlage der im Oberbegriff des Patentanspruchs 1 vorausgesetzten Art bekannt, bei der über eine Verteileinheit dem Brennraum der Heizvorrichtung über eine Primärluftzuführung Luft zugeführt werden kann und des weiteren dem Brennraum über eine Sekundärluftzuführung ebenfalls Verbrennungsluft zugeführt wird. In Strömungsrichtung nach der Verteilereinheit schließt sich eine Regeleinheit an, über die Regelluft dem Schornstein zugeführt werden kann, so dass diese Regeleinheit eine Schornsteinzugregelvorrichtung ausbildet mit einer Bypassleitung, die Luft unter Umgehung des Feuerraumes dem Schornstein zuführt. Diese Regeleinheit soll der Heizvorrichtung die für ihren gesamten Betrieb notwendige Luft liefern und mithin den Luftstrom sowohl in der Primärzuluftleitung, in der Sekundärluftleitung und in der Bypassleitung zur Umgehung des Feuerraumes liefern, um zu verhindern, dass eine Änderung des Innendruckes im aufzuheizenden Raum sich auf die Regulierung und die Arbeitsweise der Heizvorrichtung auswirkt.
Nachteilig hierbei ist, dass die Regeleinheit der Sekundärluftleitung und der Primärluftleitung in Strömungsrichtung der Luft nachgeordnet ist, so dass sich Temperaturdifferenzen zwischen Primärluftleitung, Sekundärluftleitung und der Regelluftleitungen für die Verbrennungsluftsteuerung nachteilig auswirken können.
Es ist Aufgabe der vorliegenden Erfindung, eine Feuerungsanlage zu schaffen, welche einfach, kostengünstig und ohne Betreibereingriffe verbesserte Feuerungsbedingungen herbeiführen kann und welche dabei eine hohe Betriebssicherheit gewährleistet, insbesondere auch beim Einsatz in Einzelfeuerstätten, die direkt in einen Wohnraum aufgestellt sind.
Aus der FR 2 542 849 A ist eine Feuerungsanlage der eingangs genannten Art bekannt, bei der die Verbrennungsluftzufuhr eine Schornsteinzugregelvorrichtung ausbildende Bypassleitung aufweist, die die Verbrennungsluftzufuhr unter Umgehung des Feuerraumes mit der Abgasführung verbindet und zumindest eine Drosselvorrichtung zum Freigeben, Drosseln oder Schließen des Strömungsweges durch die Bypassleitung in Abhängigkeit eines Schornsteinzugdruckes umfasst. Eine Strömungsdrosselvorrichtung ist der Verbrennungsluftzufuhr zugeordnet. Die Drosselvorrichtung für die Verbrennungsluftzufuhr und für die Bypassleitung ist als gemeinsames Drosselorgan ausgebildet so dass diese nicht unabhängig voneinander einstellbar betätigt werden können.

Es ist Aufgabe der vorliegenden Erfindung, eine Feuerungsanlage zu schaffen, welche einfach, kostengünstig und ohne Betreibereingriffe verbesserte Feuerungsbedingungen herbeiführen kann und welche dabei eine hohe Betriebssicherheit gewährleistet, insbesondere auch beim Einsatz in Einzelfeuerstätten, die direkt in einem Wohnraum aufgestellt sind.

Diese Aufgabe wird gelöst durch eine Feuerungsanlage mit den im Patentanspruch 1 angegebenen Merkmalen. Wesentliche vorteilhafte Ausgestaltungen sind in den Ansprüchen 2 bis 15 angegeben. Dabei wird als Schornstein jedwede Abgaseinrichtung verstanden.

Die Feuerungsanlage beinhaltet nicht nur eine Bypassleitung oder mehrere Bypassleitungen, durch den oder durch die die Verbrennungsluft von der Verbrennungsluftzufuhr der Feuerungsanlage vorbei zum Abgasanschluss geführt werden kann, wodurch eine integrierte Zugregelvorrichtung geschaffen ist. Vielmehr ist auch vorgesehen, dass in Strömungsrichtung der Verbrennungszuluft nach Abzweigung der Bypassleitung in der Verbrennungsluftzufuhr in der Primärluftzuführung und in der Sekundärluftzuführung und/oder in der Abgasführung vor Einmündung der Bypassleitung jeweilige Strömungsdrosselvorrichtung vorhanden sind, wodurch sich im Rahmen der Zugregelung auch Temperaturgefälle zwischen dem Brennraum und der Verbrennungsluftzufuhr in der jeweiligen Primärluftzuführung und der Sekundärluftzuführung berücksichtigen lassen, da bei Nurregelung in der Bypassleitung immer noch die Tendenz zu beobachten ist, dass Verbrennungszuluft tendenziell aufgrund des dortigen höheren Temperaturgefälles in den Brennraum strömt. Die Zugregelvorrichtung beinhaltet eine Vorrichtung zur Drosselung und zum Verschließen des freien Querschnittes der Bypassleitung und der Bypassleitungen sowie des Querschnittes der Primärluftzuführung und/oder der Sekundärluftzuführung. Bei Vorhandensein mehrerer Bypassleitungen kann dies eine Vorrichtung für alle oder mehrere Leitungen sein oder auch eine Anordnung von Drosselvorrichtungen, die jeweils gezielt auf eine einzelne Bypassleitung wirken.

Die Drosselvorrichtung ist vorteilhaft so gestaltet, dass sie ohne Schornsteinzug oder bei geringem Schornsteinzug den Weg oder die Wege durch die Bypassleitung oder die Bypassleitungen dicht verschließt. Sie kann so gestaltet sein, dass sie bei Überschreiten eines bestimmten Schornsteinzuges unmittelbar den gesamten Querschnitt der Bypassleitung oder der Bypassleitungen freigibt und erst bei Unterschreiten eines zweiten bestimmten Niveaus des Schornsteinzuges den gesamten Querschnitt der Bypassleitung oder der Bypassleitungen wieder verschließt.
Es liegt in der Natur dieses Prinzips, dass dieses zweite Schornsteinzugniveau etwas unterhalb des ersten liegt, bei welchen der Querschnitt freigegeben wird. Um ein unruhiges Betriebsverhalten der Zugregelung zu vermeiden, sollte der Abstand zwischen den beiden Schornsteinzugniveaus geeignet bemessen sein. Ein gleichmäßiges Betriebsverhalten kann auch begünstigt werden, indem die Zugregelung mit dämpfenden Elementen ausgestattet wird, die sich die Trägheit von Masse und zusätzlich oder alternativ auch die Reibung zu nutze machen können.
Eine andere vorteilhafte Ausführung ist so gestaltet, dass oberhalb eines bestimmten Schornsteinzuges zunächst nur ein Teilquerschnitt der Bypassleitung oder der Bypassleitungen freigegeben wird. Dieser freie Querschnitt wächst dann mit zunehmendem Schornsteinzug immer weiter an, so dass sich ein breiterer Arbeitsbereich der Zugregelvorrichtung ergibt. Durch geeignete Gestaltung der Zugregelvorrichtung kann der Zusammenhang zwischen freiem Querschnitt und Schornsteinzug eingestellt werden.
Eine einfache und wirksame Ausführung der Erfindung enthält eine Bypassleitung, die hinter dem Feuerraum parallel zu diesem verläuft und eine direkte Verbindung zwischen dem Verbrennungsluftanschluss auf der Rückseite der Feuerstätte und dem Abgasauslassstutzen der Feuerstätte herstellt. In diesen Kanal ist eine Drosselklappe integriert, die so gelagert ist, dass sie innerhalb des Kanals verschwenkt werden kann, und im Ruhezustand, d. h. ohne Schornsteinzug so liegt, dass die Bypassleitung geschlossen ist. Das dichte Schließen wird einerseits durch Einsatz einer geeigneten Dichtung zwischen Klappe und Kanalwänden erreicht und andererseits dadurch, dass die Klappe mit einem Gewichtselement, welches idealerweise verstellbar oder verschiebbar oder auch beweglich angeordnet ist, beaufschlagt ist, wodurch eine Hebelwirkung auf die Achse der Drosselklappe in einer Weise ausgeübt wird, dass die Drosselklappe im Zustand ohne Schornsteinzug ausreichend fest gegen die Dichtung gepresst wird und bei zunehmendem Schornsteinzug immer noch an der Dichtung anliegt, bis das Schornsteinzugniveau erreicht ist, bei dem die Klappe öffnen soll. Die Lagerung der Drosselklappe und die Lage sowie die Massen der Klappe und des Gewichtselementes sind so aufeinander abgestimmt, dass bei weiter zunehmendem Schornsteinzug die Klappe allmählich mehr und mehr öffnet und somit mehr Querschnitt des Nebenkanals freigegeben wird, wodurch schließlich zunehmend mehr Luft durch die Bypassleitung am Feuerraum vorbeiströmen kann. Auf diese Weise wird ein zu starkes Anfachen des Feuers durch zu hohen Schornsteinzug vermieden. Das Schornsteinzugniveau, bei dem die Klappe zu öffnen beginnt, ist der Ansprechpunkt der Zugregelvorrichtung. Dieser Ansprechpunkt kann durch Verändern des Gewichtselementes in seiner Lage oder Masse eingestellt und an die Anforderungen der Feuerung angepasst werden. Technisch sinnvolle Einstellungen für den Ansprechpunkt bewegen sich bei üblichen Einzelfeuerstätten im Bereich zwischen 5 Pa und 50 Pa.
Durch die Geometrie der Drosselklappe und des Gewichtselementes kann erreicht werden, dass die vom Gewichtselement ausgeübte schließende Hebelkraft mit zunehmender Öffnung der Klappe abnimmt und somit die Klappe bei zunehmendem Schornsteinzug rascher der vollständig geöffneten Position zustrebt. Diese Auslegung kann soweit gehen, dass ein nahezu binäres Verhalten der Drosseleinrichtung erreicht wird, wobei es vorteilhaft sein kann, das Gewichtselement beweglich zu lagern in der Art, dass es bei Überschreiten einer bestimmten Auslenkung der Drosselvorrichtung zu einer die Bewegung verstärkenden oder auch abschwächenden Verschiebung des Gewichtselementes kommt. Entsprechend könnte die Geometrie auch so gewählt werden, dass sich der Regelbereich über einen größeren Bereich des Schornsteinzuges erstreckt, indem Drosselklappe und Gewichtselement so abgestimmt sind, dass das Gewichtselement bei zunehmender Auslenkung der Drosselklappe ein überproportional zunehmendes rückstellendes Drehmoment auf die Achse der Drosselklappe ausgeübt wird.
In einer anderen Ausführung der Zugregelvorrichtung können neben dem Schornsteinzug auch andere Betriebsparameter des freien Querschnitts des Nebenkanals oder der Nebenkanäle eingesetzt werden. Insbesondere kann die Abgastemperatur oder Brennraumtemperatur durch thermostatisch wirkende Stellelemente in die Regelung eingreifen. Mit Hilfe von Stellgliedern auf Basis von Bimetallen oder ähnlichem kann dies ohne die Notwendigkeit elektrischer Hilfsenergie umgesetzt werden.

In anderen Ausführungen kann die erfindungsgemäße Zugregelung um Vorrichtungen ergänzt werden, die den Luft- oder Abgasstrom an einer oder an mehreren Stellen innerhalb der Luft- bzw. Abgaskanäle drosseln. In einer Anordnung befindet sich eine Drosselstelle im Abgasweg oberhalb des Feuerraums vor der Verbindung des Abgasweges mit dem Nebenkanal der erfindungsgemäßen Zugregelvorrichtung. Auf diese Weise wird die Wirkung des Nebenkanals verstärkt, da die Drosselstelle zu einer Erhöhung des Strömungswiderstandes entlang des Gasweges durch den Feuerraum hin zum Abgasanschlussstutzen führt, so dass der weg durch den Bypasskanal bei sich öffnender Drosselklappe stärker bevorzugt wird. Besonders vorteilhaft kann hier auch eine zusätzliche thermische Regelkomponente eingeführt werden, indem diese Drosselstelle durch eine Klappe realisiert wird, die sich mit zunehmender Abgastemperatur schließt und somit die erhöhte Wirkung des Nebenkanals der Zugregelvorrichtung erst nach der Anheizphase der Feuerung bewirkt wird.

Gegenüber den Einrichtungen zur Regulierung des Schornsteinzuges in Form von Nebenlufteinrichtungen bietet die Erfindung den Vorteil, dass durch die Integration der Zugregelvorrichtung in die Feuerungsanlage keine Probleme durch Druckdifferenzen zwischen Aufstellort der Feuerungsanlage und Einbauort einer Nebenlufteinrichtung auftreten können. Die Zugregelung ist integraler Bestandteil der Feuerungsanlage und verursacht keine zusätzliche Öffnung im Schornstein, durch die eine Gefahr des unbemerkten Austritts von Abgasen entstehen kann. Durch Integration in die Feuerungsanlage bleibt die Möglichkeit zur externen Zufuhr der Verbrennungsluft wirksam erhalten. Eine Luftentnahme aus dem Aufstellraum oder dem Gebäude kann vermieden werden.

Ein weiterer Vorteil der erfindungsgemäßen Feuerungsanlage besteht darin, dass die Zugregelvorrichtung durch ihre Integration in die Feuerungsanlage optimal an die Feuerung angepasst werden kann durch Auswahl des Ansprechpunktes, des Arbeitsbereiches und der Querschnitte der Bypassleitung oder der Bypassleitungen.

Gegenüber bekannten manuellen Lufteinstellmöglichkeiten bietet die erfindungsgemäße Feuerungsanlage den Vorteil, dass sie automatisch und sehr feinfühlig arbeitet. Insbesondere bietet sich die vorgesehene Zugregelvorrichtung als Ergänzung zur Einstellung der Verteilung der Luftströme innerhalb der Feuerung an. Durch die Vergleichmäßigung des Schornsteinzuges können die dafür vorgesehenen Einstellelemente wesentlich feinfühliger und reproduzierbarer eingestellt werden. Der Ausgleich eines hohen Schornsteinzuges ist durch eine einfache manuelle Drosselvorrichtung bisher kaum befriedigend möglich, weil diese Drosseleinrichtung dann häufig im Bereich kleinster Öffnungen betrieben werden muss mit den entsprechenden Ungenauigkeiten und den Überreaktionen auf schwankende Schornsteinzüge.

Die erfindungsgemäße Feuerungsanlage bietet zudem den Vorteil, stromlos mit hoher Zuverlässigkeit zu arbeiten.

Weitere Vorteile und Einzelheiten der Erfindung ergeben sich aus der nachfolgenden Beschreibung und der Zeichnung. In der Zeichnung zeigen:
- Fig. 1: eine Schemadarstellung eines Ausführungsbeispieles einer Feuerungsanlage nach der Erfindung mit Darstellung der Verbrennungsluftzufuhr, der Abgasführung und der Bypassleitung,
- Fig. 2: eine Seitenansicht auf ein Ausführungsbeispiel einer Feuerungsanlage nach der Erfindung;
- Fig. 3 a), b): ein Ausführungsbeispiel einer Drosselklappe mit einem verstellbaren Gewichtselement, einmal in der Nullstellung (a) und einmal in der verschwenkten Stellung (b),
- Fig. 4: ein Diagramm, das für verschiedene Druckzustände im Schornsteinzug die Stellung der Klappe veranschaulicht.

In der Zeichnung ist allgemein mit 1 eine Feuerungsanlage beziffert, die eine Verbrennungsluftzufuhr 2 und eine Abgasführung 3 aufweist. Diese Verbrennungsluftzufuhr 2 umfasst eine Primärluftzuführung 4 und eine Sekundärluftzuführung 5 mit jeweiligen Drosselvorrichtungen.

Zwischen der Verbrennungsluftzufuhr 2 und der Abgasführung 3 ist eine Bypassleitung 8 mit einer Drosseleinrichtung 7 vorgesehen. Über diese Bypassleitung 8 ist die Verbrennungsluft bzw. ein Teil der Verbrennungsluft unter Umgehung des Feuerraumes der Feuerungsanlage 1 direkt in die Abgasführung und damit in einen an die Abgasführung 3 angeschlossenen Schornstein zu führen.

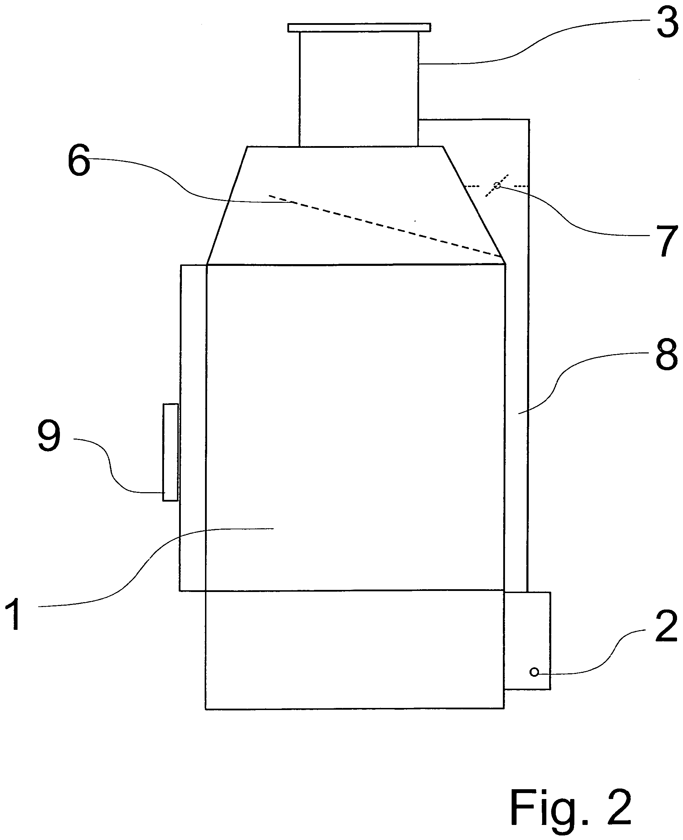

Wie aus Fig. 2 zu ersehen ist, ist die Feuerungsanlage 1 noch mit einer Feuerraumtür bzw. einem Feuerraumtürgriff 9 ausgestattet und hat eine innere Abgasumlenkung 6.

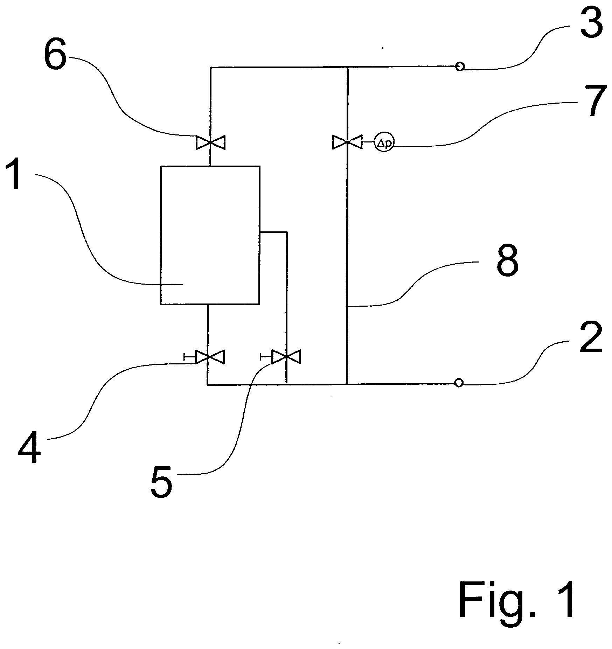

Die in der Fig. 1 dargestellte Drosseleinrichtung 7 ist in Fig. 2 näher veranschaulicht. Es handelt sich um eine druckgesteuerte Drosseleinrichtung, die zusammen mit der Bypassleitung die Zugregelvorrichtung bildet.

Wie aus Fig. 2 ersichtlich ist, ist die Bypassleitung 8 hinter dem Feuerraum der Feuerungsanlage 1 angeordnet und mithin von einem Wohnraum aus nicht einzusehen.

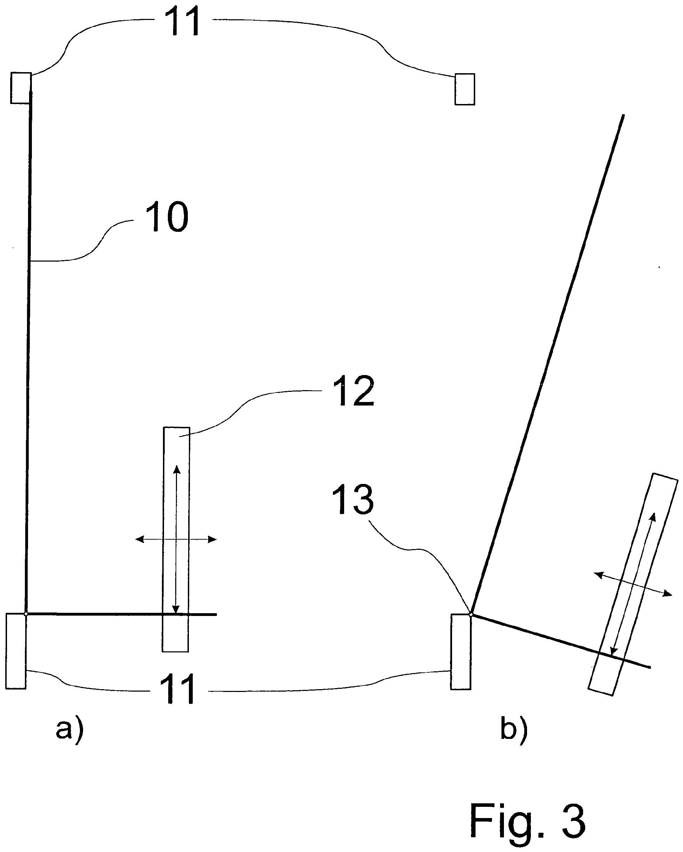

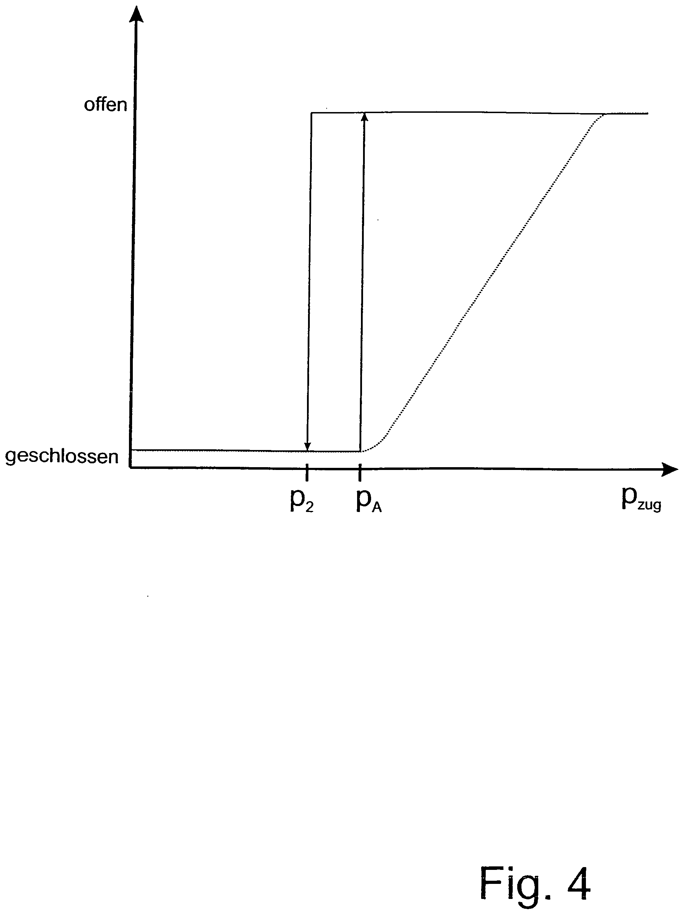

Wie näher aus den Fig. 3 hervorgeht, kann die dort als Drosselklappe 10 bezifferte Drosseleinrichtung der Zugregelvorrichtung ein um eine Drehachse 13 verstellbares Gewichtselement 12 aufweisen. Die Drosselklappe 10 dichtet in der Bypassleitung über die Dichtfläche 11 ab. Dies kann in Abhängigkeit eines vorgebbaren Zugdruckes im Schornstein geschehen, indem bei dem dort gezeigten Druck im Schornstein zu Fig. 2 die Drosselklappe geschlossen bleibt und bei einem vorgebbaren Druck PA öffnet, sei es stufenmäßig und damit sprunghaft bis zu einem vollständig geöffneten Zustand oder aber dass sie sich stetig öffnet, wie dies durch die Punktdarstellungen in Fig. 4 angedeutet ist. Umgekehrt wird die Drosselklappe geschlossen, bei Unterschreiten des Druckes PA, wie dies im einzelnen bereits näher beschrieben wurde.

## Patentansprüche

1. Feuerungsanlage (1), die mit Brennstoffen wie Holz, Stroh oder anderen nachwachsenden Brennstoffen oder mit Kohlenstoff befeuerbar ist, mit einem verschließbaren Feuerraum und einem Verbrennungsluftanschluss mit einer Verbrennungsluftzufuhr (2), wobei der Feuerraum eine Primärluftzuführung (4) sowie eine Sekundärluftzuführung (5) der Verbrennungsluftzufuhr (2) und eine an einen Schornstein anschließbare Abgasführung (3) aufweist, wobei die Verbrennungsluftzufuhr (2) eine eine Schornsteinzugregelvorrichtung ausbildende Bypassleitung (8) aufweist, die die Verbrennungsluftzufuhr (2) unter Umgehung des Feuerraumes mit der Abgasführung (3) verbindet und zumindest eine Drosselvorrichtung (7) zum Freigeben, Drosseln oder Schließen des Strömungsweges durch die Bypassleitung (8) in Abhängigkeit eines Schornsteinzugdruckes umfasst, und wobei die Verbrennungsluftzufuhr (2) und/oder die Abgasführung (3) eine Strömungsdrosselvorrichtung aufweist, **dadurch gekennzeichnet, dass** die Verbrennungsluftzufuhr (2) eine Primärluft-zuführung (4) und eine Sekundärluftzuführung (5) mit jeweiligen Drosselvorrichtungen aufweist.

2. Feuerungsanlage nach Anspruch 1, **dadurch gekennzeichnet, dass** die Bypassleitung (8) mehrere Kanäle mit einer auf den Schornsteinzugdruck reagierenden Drosselvorrichtung (7) für die Kanäle umfasst.

3. Feuerungsanlage nach Anspruch 1 oder 2, **dadurch gekennzeichnet, dass** die Bypassleitung (8) mehrere Kanäle mit jeweils zumindest einer auf den Schornsteinzugdruck reagierenden Drosselvorrichtung (7) aufweist.

4. Feuerungsanlage nach einem der Ansprüche 1 bis 3, **dadurch gekennzeichnet, dass** die Drosselvorrichtung (7) auf einen vorgebbaren Schornsteinzugdruck einstellbar ist und bei Erreichen dieses Schornsteinzugdruckes eine sprungartige Charakteristik aufweist.

5. Feuerungsanlage nach einem der Ansprüche 1 bis 4, **dadurch gekennzeichnet, dass** die Drosselvorrichtung (7) auf einen bestimmten Schornsteinzugdruck einstellbar ist und oberhalb dieses Schornsteinzugdruckes eine kontinuierliche Charakteristik aufweist.

6. Feuerungsanlage nach einem der Ansprüche 1 bis 5, **dadurch gekennzeichnet, dass** die Drosselvorrichtung (7) auf einen Schornsteinzugdruck zwischen 5 Pa und 50 Pa eingestellt ist.

7. Feuerungsanlage nach einem der Ansprüche 1 bis 6, **dadurch gekennzeichnet, dass** die Drosselvorrichtung (7) Bewegungsdämpfungselemente aufweist.

8. Feuerungsanlage nach Anspruch 7, **dadurch gekennzeichnet, dass** die Drosselvorrichtung (7) auf Massenträgheit basierende Bewegungsdämpfungselemente aufweist.

9. Feuerungsanlage nach Anspruch 8, **dadurch gekennzeichnet, dass** die Drosselvorrichtung (7) auf Reibung basierende Bewegungsdämpfungselemente aufweist.

10. Feuerungsanlage nach einem der Ansprüche 1 bis 9, **dadurch gekennzeichnet, dass** die Verbrennungsluftzufuhr (2) und/oder die Abgasführung (3) Strömungsdrosseleinrichtungen aufweisen.

11. Feuerungsanlage nach einem der Ansprüche 1 bis 10, **dadurch gekennzeichnet, dass** die Abgasführung (3) vor ihrem Austritt in den Schornstein eine Drosselvorrichtung aufweist.

12. Feuerungsanlage nach einem der Ansprüche 1 bis 11, **dadurch gekennzeichnet, dass** in der Verbrennungszufuhr (2), in der Abgasführung (3) und/oder der Bypassleitung (8) zumindest eine thermostatisch gesteuerte Drosselvorrichtung vorgesehen ist.

13. Feuerungsanlage nach einem der Ansprüche 1 bis 12, **dadurch gekennzeichnet, dass** in der Abgasführung (3) und/oder in der Verbrennungsluftzufuhr (2) und/oder in der Bypassleitung (8) zumindest eine manuell einstellbare Drosselvorrichtung vorgesehen ist.

14. Feuerungsanlage nach einem der Ansprüche 1 bis 13, **dadurch gekennzeichnet, dass** die Drosselvorrichtung (7) mit einstellbaren Rückstellelementen (12) versehen ist.

15. Feuerungsanlage nach Anspruch 14, **dadurch gekennzeichnet, dass** eine Strömungsdrosselvorrichtung ein beweglich gelagertes Rückstellelement aufweist.

## Claims

1. Firing installation (1) which can be fired using fuels such as wood, straw or other renewable fuels or using carbon, comprising a furnace that can be closed and a combustion air connection comprising a combustion air supply (2), the furnace comprising a primary air supply (4) and a secondary air supply (5) for the combustion air supply (2) and an exhaust gas duct (3) that can be connected to a chimney, the combustion air supply (2) comprising a bypass line (8) that forms a chimney controller and connects the combustion air supply (2) to the exhaust gas duct (3), bypassing the furnace, and comprising at least one throttle device (7) for releasing, throttling or closing the flow path by means of the bypass line (8), depending on a chimney draught pressure, and the combustion air supply (2) and/or the exhaust gas duct (3) comprising a flow throttle device, **characterised in that** the combustion air supply (2) comprises a primary air supply (4) and a secondary air supply (5) having respective throttle devices.

2. Firing installation according to claim 1, **characterised in that** the bypass line (8) comprises a plurality of channels having a throttle device (7) for the channels that is responsive to the chimney draught pressure.

3. Firing installation according to either claim 1 or claim 2, **characterised in that** the bypass line (8) comprises a plurality of channels each having at least one throttle device (7) that is responsive to the chimney draught pressure.

4. Firing installation according to any of claims 1 to 3, **characterised in that** the throttle device (7) can be adjusted to a predeterminable chimney draught pressure and has an abrupt characteristic when this chimney draught pressure is reached.

5. Firing installation according to any of claims 1 to 4, **characterised in that** the throttle device (7) can be adjusted to a specific chimney draught pressure and has a continuous characteristic above this chimney draught pressure.

6. Firing installation according to any of claims 1 to 5, **characterised in that** the throttle device (7) is adjusted to a chimney draught pressure of between 5 Pa and 50 Pa.

7. Firing installation according to any of claims 1 to 6, **characterised in that** the throttle device (7) comprises motion damping elements.

8. Firing installation according to claim 7, **characterised in that** the throttle device (7) comprises motion damping elements based on mass inertia.

9. Firing installation according to claim 8, **characterised in that** the throttle device (7) comprises motion damping elements based on friction.

10. Firing installation according to any of claims 1 to 9, **characterised in that** the combustion air supply (2) and/or the exhaust gas duct (3) comprise flow throttle devices.

11. Firing installation according to any of claims 1 to 10, **characterised in that** the exhaust gas duct (3) comprises a throttle device upstream of the outlet thereof into the chimney.

12. Firing installation according to any of claims 1 to 11, **characterised in that** at least one thermostatically controlled throttle device is provided in the combustion air supply (2), in the exhaust gas duct (3) and/or the bypass line (8).

13. Firing installation according to any of claims 1 to 12, **characterised in that** at least one manually adjustable throttle device is provided in the exhaust gas duct (3) and/or in the combustion air supply (2) and/or in the bypass line (8).

14. Firing installation according to any of claims 1 to 13, **characterised in that** the throttle device (7) is provided with adjustable resetting elements (12).

15. Firing installation according to claim 14, **characterised in that** a flow throttle device comprises a movably mounted resetting element.

## Revendications

1. Installation de chauffage (1), qui peut être alimenté en combustibles tels que du bois, de la paille ou d'autres combustibles renouvelables, ou en carbone, l'installation de chauffage comprenant une chambre de combustion pouvant être fermée et un raccord d'air de combustion muni d'une alimentation en air de combustion (2), la chambre de combustion comportant une alimentation en air primaire (4) et une alimentation en air secondaire (5) de l'alimentation en air de combustion (2) et un système d'évacuation des gaz (3) pouvant être raccordé à une cheminée, l'alimentation en air de combustion (2) comportant un conduit de dérivation (8) qui forme un dispositif de régulation de tirage de cheminée, qui relie l'alimentation en air de combustion (2) au système d'évacuation des gaz sans passer par la chambre de combustion et qui comporte au moins un dispositif d'étranglement (7) destiné à libérer, étrangler ou fermer le trajet d'écoulement à travers le conduit de dérivation (8) en fonction d'une pression de tirage de cheminée et l'alimentation en air de combustion (2) et/ou le système d'évacuation des gaz (3) comportant un dispositif d'étranglement d'écoulement, **caractérisée en ce que** l'alimentation en air de combustion (2) comporte une alimentation en air primaire (4) et une alimentation en air secondaire (5) munie de dispositifs d'étranglement respectifs.

2. Installation de chauffage selon la revendication 1, **caractérisée en ce que** le conduit de dérivation (8) comporte une pluralité de conduits, un dispositif d'étranglement (7) qui réagit à la pression de tirage de cheminée étant destinés aux conduits.

3. Installation de chauffage selon la revendication 1 ou 2, **caractérisée en ce que** le conduit de dérivation (8) comporte une pluralité de conduits munis chacun d'au moins un dispositif d'étranglement (7) réagissant à la pression de tirage de cheminée.

4. Installation de chauffage l'une des revendications 1 à 3, **caractérisée en ce que** le dispositif d'étranglement (7) est réglable à une pression de tirage de cheminée prédéterminable et présente, lorsque cette pression de tirage de cheminée, une caractéristique en forme de marche.

5. Installation de chauffage selon l'une des revendications 1 à 4, **caractérisée en ce que** le dispositif d'étranglement (7) est réglable à une pression de tirage de cheminée déterminée et présente, au-dessus de cette pression de tirage de cheminée, une caractéristique continue.

6. Installation de chauffage selon l'une des revendications 1 à 5, **caractérisée en ce que** le dispositif d'étranglement (7) est réglé à une pression de tirage de cheminée entre 5 Pa et 50 Pa.

7. Installation de chauffage selon l'une des revendications 1 à 6, **caractérisée en ce que** le dispositif d'étranglement (7) comporte des éléments d'amortissement de mouvement.

8. Installation de chauffage selon la revendication 7, **caractérisée en ce que** le dispositif d'étranglement (7) comporte des éléments d'amortissement de mouvement à inertie.

9. Installation de chauffage selon la revendication 8, **caractérisée en ce que** le dispositif d'étranglement (7) comporte des éléments d'amortissement de mouvement à friction.

10. Installation de chauffage selon l'une des revendications 1 à 9, **caractérisée en ce que** l'alimentation en air de combustion (2) et/ou le système d'évacuation des gaz (3) comportent des moyens d'étranglement d'écoulement.

11. Installation de chauffage selon l'une des revendications 1 à 10, **caractérisée en ce que** le système d'évacuation des gaz (3) comporte, en amont de sa sortie dans la cheminée, un dispositif d'étranglement.

12. Installation de chauffage selon l'une des revendications 1 à 11, **caractérisée en ce qu'**au moins un dispositif d'étranglement à commande thermostatique est prévu dans l'alimentation en air de combustion (2), dans le système d'évacuation des gaz (3) et/ou le conduit de dérivation (8).

13. Installation de chauffage selon l'une des revendications 1 à 12, **caractérisée en ce qu'**au moins un dispositif d'étranglement à commande manuel est prévu dans le système d'évacuation des gaz (3) et/ou dans l'alimentation en air de combustion (2) et/ou le conduit de dérivation (8).

14. Installation de chauffage selon l'une des revendications 1 à 13, **caractérisée en ce que** le dispositif d'étranglement (7) est pourvu d'éléments de rappel réglables (12).

15. Installation de chauffage selon la revendication 14, **caractérisée en ce qu'**un dispositif d'étranglement d'écoulement comprend un élément de rappel monté de façon mobile.
